# EUROPÄISCHE PATENTSCHRIFT

(11) **EP 0 784 087 B1**
(45) Veröffentlichungstag und Bekanntmachung des Hinweises auf die Patenterteilung: **23.04.2003**
(21) Anmeldenummer: 96120462.5
(22) Anmeldetag: 19.12.1996
(51) Int. Cl.: C09D 183/04, C08K 5/00

(54) **Eingefärbte Silikonbeschichtung**
Coloured silicone coating
Revêtement coloré de polysiloxane

(30) Priorität: 10.01.1996 DE 19600622
(43) Veröffentlichungstag der Anmeldung: 16.07.1997
(73) Patentinhaber: 4P Rube Göttingen GmbH, D-37077 Göttingen (DE)
(72) Erfinder: Kampf, Jürgen, 37176 Nörten/Hardenberg (DE)
(74) Vertreter: Hutzelmann, Gerhard

(56) Entgegenhaltungen:
- DE-A- 4 117 667
- DATABASE WPI Derwent Publications Ltd., London, GB; AN 7512081 XP002043975 & SU 420 645 A (REPAIR PROD WK SHOPS) , 9.September 1974

## Beschreibung

Die Erfindung bezieht sich auf eine eingefärbte Silikonbeschichtung.

Silikone mit eingerührten Pigmenten sind beispielsweise aus der SU-A-420 645 bekannt. Diese weisen jedoch den Nachteil auf, daß diese Pigmente im Laufe der Zeit an die Oberfläche der Beschichtung wandern und dort abgewischt werden können, bzw. anliegende Materialien wie zum Beispiel Klebstoffe verunreinigen.

Der Erfindung liegt die Aufgabe zugrunde, eingefärbte Silikone für Beschichtungen herzustellen, die keine abfärbenden Eigenschaften aufweisen.

Diese Aufgabe wird erfindungsgemäß dadurch gelöst, daß in das Silikon Farbstoffe in Form von Farbstofflösungen eingebracht sind, wobei die Farbstofflösung auf wässriger Basis aufgebaut ist und die Verbindung zwischen Silikon und Farbstofflösung.

Hierdurch werden die Farbstoffe derart in das Silikon eingelagert, daß eine Migration der Farbstoffe nicht mehr möglich ist.

Des weiteren wird der Einsatz von giftigen Lösungsmitteln verhindert, wodurch die Beschichtung auch für Lebensmittel geeignet ist.

Schließlich wird durch die Anwesenheit der Emulgatoren die Verbindung zwischen Silikon und Farbstoff nochmals gefestigt, und es besteht nicht die Gefahr der Entmischung.

Erfindungsgemäß ist es beispielsweise möglich, daß eine Silikonbeschichtung, welche keine Migrationseffekte von Pigmenten aufweist, als Ersatz für vollflächigen Druck unter Silikon oder als Kennzeichnung von beidseitig silikonisierten Materialien eingesetzt wird. Dazu werden wässrige Farbstofflösungen in lösungsmittelfreies Silikon eingerührt. Mit Hilfe bestimmter Emulgatoren wird eine stabile Emulsion hergestellt, welche nach dem Aushärten eine Wanderung des Farbstoffes aus dem Silikon heraus verhindert.

## Patentansprüche

1. Eingefärbte Silikonbeschichtung, **dadurch gekennzeichnet, daß** in das Silikon Farbstoffe in Form von Farbstofflösungen eingebracht sind, wobei die Farbstofflösung auf wässriger Basis aufgebaut ist und die Verbindung zwischen Silikon und Farbstofflösung durch Emulgatoren stabilisiert ist.

## Claims

1. Coloured silicone coating, **characterised in that** colorants in the form of colorant solutions are introduced into the silicone, wherein the colorant solution has an aqueous base and the bond between silicone and colorant solution is stabilised by emulsifiers.

## Revendications

1. Revêtement de silicone coloré **caractérisé en ce que** des colorants sont introduits dans la silicone sous la forme de solutions colorantes, la solution colorante étant formée sur base aqueuse et la liaison entre la silicone et la solution colorante étant stabilisée par des émulsifiants.
